# EUROPEAN PATENT APPLICATION

(11) **EP 4 570 773 A1**
(43) Date of publication of application: **18.06.2025**
(21) Application number: 23215769.3
(22) Date of filing: 12.12.2023
(51) Int. Cl.: C04B 28/08, C04B 18/06, C04B 22/06, C04B 22/10, C04B 12/04, C04B 28/26, C04B 18/14, C04B 18/10, C04B 7/12

(54) **A BINDING COMPOSITION**

(71) Applicant: The Provost, Fellows, Foundation Scholars, and the other members of Board, of the College of the Holy & Undiv. Trinity of Queen Elizabeth near Dublin, Dublin 2 (IE)
(72) Inventor: Pavia, Sara, Dublin (IE); Lei, Zehao, Dublin (IE)
(74) Representative: FRKelly

(57) **Abstract**

The present invention relates to binding compositions comprising ash and slag. Also disclosed are methods for producing the binding compositions and use of the binding compositions as binders, cements, and in concretes. Also disclosed are articles comprising the binding compositions, which articles can find utility as construction commodities such as bricks, tiles, blocks, and other refractory materials.

## Description

### Field of the invention

The present invention relates to binding compositions. Also disclosed are methods for producing the binding compositions and use of the binding compositions as binders, cements, and in concretes. Also disclosed are articles comprising the binding compositions, which articles can find utility as construction commodities such as bricks, tiles, blocks, and other refractory materials.

### Background to the invention

Biomass is an inexhaustible and abundant renewable resource that is constantly replenished through the process of photosynthesis. The use of biomass as a partial replacement for fossil fuels is of additional importance for global warming because of the potential for carbon dioxide (CO₂)-neutral biomass combustion. With the call for carbon neutrality by 2030, biomass power plants are back in the limelight.

Biomass ash is the inorganic non-combustible part of a fuel left after combustion and usually contains a variety of mineral components. However, one notable issue is that biomass combustion generates a substantial quantity of ash, which poses a significant obstacle to its further development. If not properly managed, the rapid increase of biomass ash can potentially replace coal ash as a new environmental burden.

The construction and building materials sector is also under pressure for carbon-emission reduction and sustainable development.

The present invention aims to produce low carbon, environmentally friendly, high performance, sustainable and economical building materials in order to reduce carbon emissions in the construction sector while reducing environmental burden.

### Summary of the invention

According to a first aspect of the present invention there is provided a binding composition comprising ash and slag.

Optionally, the binding composition comprises ash and slag in a ratio of at least 10:90 (w/w, ash:slag).

Further optionally, the binding composition comprises ash and slag in a ratio of at least 20:80 (w/w, ash:slag), optionally at least 30:70 (w/w, ash:slag), optionally at least 40:60 (w/w, ash:slag), optionally at least 50:50 (w/w, ash:slag), optionally at least 60:40 (w/w, ash:slag), optionally at least 70:30 (w/w, ash:slag), optionally at least 80:20 (w/w, ash:slag), optionally at least 90:10 (w/w, ash:slag).

Still further optionally, the binding composition comprises ash and slag in a ratio of at least 30:70 (w/w, ash:slag), optionally at least 40:60 (w/w, ash:slag).

Preferably, the binding composition comprises ash and slag in a ratio of at least 40:60 (w/w, ash:slag).

Optionally, the binding composition comprises ash and slag in a ratio of between 10:90 (w/w, ash:slag) and 90:10 (w/w, ash:slag), optionally between 20:80 (w/w, ash:slag) and 80:20 (w/w, ash:slag), optionally between 30:70 (w/w, ash:slag) and 70:30 (w/w, ash:slag), optionally between 40:60 (w/w, ash:slag) and 60:40 (w/w, ash:slag).

Further optionally, the binding composition comprises ash and slag in a ratio of between 30:70 (w/w, ash:slag) and 70:30 (w/w, ash:slag), optionally between 40:60 (w/w, ash:slag) and 60:40 (w/w, ash:slag).

Preferably, the binding composition comprises ash and slag in a ratio of between 40:60 (w/w, ash:slag) and 60:40 (w/w, ash:slag).

Optionally, the binding composition comprises ash and slag in a ratio of 10:90 (w/w, ash:slag).

Further optionally, the binding composition comprises ash and slag in a ratio of 20:80 (w/w, ash:slag), optionally 30:70 (w/w, ash:slag), optionally 40:60 (w/w, ash:slag), optionally 50:50 (w/w, ash:slag), optionally 60:40 (w/w, ash:slag), optionally 70:30 (w/w, ash:slag), optionally 80:20 (w/w, ash:slag), optionally 90:10 (w/w, ash:slag).

Further optionally, the binding composition comprises ash and slag in a ratio of 20:80 (w/w, ash:slag), optionally 30:70 (w/w, ash:slag), optionally 40:60 (w/w, ash:slag), optionally 50:50 (w/w, ash:slag), optionally 60:40 (w/w, ash:slag), optionally 70:30 (w/w, ash:slag), optionally 80:20 (w/w, ash:slag), optionally 90:10 (w/w, ash:slag).

Still further optionally, the binding composition comprises ash and slag in a ratio of 30:70 (w/w, ash:slag) or 40:60 (w/w, ash:slag).

Preferably, the binding composition comprises ash and slag in a ratio of 40:60 (w/w, ash:slag).

Optionally, the ash is ash obtained from the combustion of biomass. Further optionally, the ash is ash obtained from the uncontrolled combustion of biomass.

Optionally, the ash is biomass ash.

Preferably, the ash is biomass ash.

Optionally, the biomass comprises wood, wood or woody residues, agricultural residues, herbaceous residues, or combinations thereof.

Optionally, the biomass comprises straw, maize, switchgrass, miscanthus and bamboo.

Optionally, the biomass comprises oil cake. Further optionally, the biomass comprises seed oil cake. Still further optionally, the biomass comprises olive oil cake.

Optionally, the biomass comprises seed husk. Further optionally, the biomass comprises rice husk.

Optionally, the biomass comprises corn straw. Further optionally, the biomass comprises at least one of corn leaves, stalks, and cobs.

Optionally, the ash is in dry form. Further optionally, the ash is in powder form. Still further optionally, the ash is in dry powder form.

Optionally, the ash is in ground form. Further optionally, the ash is in milled form.

Optionally, at least part of the ash is amorphous. Further optionally, the ash is amorphous.

Optionally, at least part of the ash is crystalline. Further optionally, the ash is crystalline.

Optionally, at least part of the ash is amorphous and at least part of the ash is crystalline.

Optionally, the ash comprises at least one carbonate.

Optionally, the ash comprises at least one salt of carbonic acid.

Optionally, the ash comprises at least one carbonate mineral.

Optionally, the at least one carbonate is selected from calcite (CaCO3), kalicinite (KHCO3), fairchildite (K2Ca(CO3)2), butschliite (K2Ca(CO3)2), baylissite (K2Mg(CO3)2.4H2O), and kutnahorite (Ca(Mn,Mg,Fe)CO3).

Further optionally, the at least one carbonate is selected from calcite (CaCO3) and butschliite (K2Ca(CO3)2).

Still further optionally, the at least one carbonate is calcite (CaCO3) and butschliite (K2Ca(CO3)2).

Preferably, the at least one carbonate is calcite (CaCO3) and butschliite (K2Ca(CO3)2).

Optionally, the ash comprises at least one silicate.

Optionally, the ash comprises at least one silicate mineral.

Optionally, the at least one silicate is selected from microcline (KAlSi3O8), anorthite (CaAl2Si2O8), wollastonite (CaSiO3), akermanite (Ca2MgSi2O7), merwinite (Ca3Mg(SiO4)2), flamite ( Ca8-x(Na,K)x(SiO4)4-x(PO4)x), enstatite (MgSiO3), hedenbergite (CaFe2+Si2O6), diopside (CaMgSi2O6), akermanite (Ca2MgSi2O7), orthoclase (KAlSi3O8), and sodalite (Na4[Cl|(AlSiO4)3]).

Further optionally, the at least one silicate is selected from merwinite (Ca3Mg(SiO4)2) and enstatite (MgSiO3).

Still further optionally, the at least one silicate is merwinite (Ca3Mg(SiO4)2) and enstatite (MgSiO3).

Preferably, the at least one silicate is merwinite (Ca3Mg(SiO4)2) and enstatite (MgSiO3).

Optionally, the ash comprises calcite (CaCO3), butschliite (K2Ca(CO3)2), merwinite (Ca3Mg(SiO4)2), and enstatite (MgSiO3).

Preferably, the ash comprises calcite (CaCO3), butschliite (K2Ca(CO3)2), merwinite (Ca3Mg(SiO4)2), and enstatite (MgSiO3).

Optionally, the ash comprises at least one electrolyte.

Optionally, the at least one electrolyte is selected from sodium, potassium, chloride, magnesium, calcium, and phosphate.

Further optionally, the at least one electrolyte is selected from potassium, magnesium, calcium, and phosphate.

Still further optionally, the at least one electrolyte is potassium, magnesium, calcium, and phosphate.

Preferably, the at least one electrolyte is potassium, magnesium, calcium, and phosphate.

Optionally, the ash comprises calcite (CaCO3), butschliite (K2Ca(CO3)2), merwinite (Ca3Mg(SiO4)2), enstatite (MgSiO3), potassium, magnesium, calcium, and phosphate.

Preferably, the ash comprises calcite (CaCO3), butschliite (K2Ca(CO3)2), merwinite (Ca3Mg(SiO4)2), enstatite (MgSiO3), potassium, magnesium, calcium, and phosphate.

Optionally, the ash comprises at least one of calcium oxide (CaO), potassium oxide (K2O), silicon dioxide (SiO2), iron(III) oxide (Fe2O3), aluminium(III) oxide (Al2O3), magnesium oxide (MgO), manganese(II) oxide (MnO), titanium(IV) oxide (TiO2), sulfur trioxide (SO3), and chlorine (Cl).

Further optionally, the ash comprises at least one of calcium oxide (CaO) and potassium oxide (K2O).

Still further optionally, the ash comprises at least one of calcium oxide (CaO), potassium oxide (K2O), silicon dioxide (SiO2), and iron(III) oxide (Fe2O3).

Still further optionally, the ash comprises at least one of calcium oxide (CaO), potassium oxide (K2O), silicon dioxide (SiO2), iron(III) oxide (Fe2O3), aluminium(III) oxide (Al2O3), and magnesium oxide (MgO).

Still further optionally, the ash comprises calcium oxide (CaO), potassium oxide (K2O), silicon dioxide (SiO2), iron(III) oxide (Fe2O3), aluminium(III) oxide (Al2O3), and magnesium oxide (MgO).

Still further optionally, the ash comprises calcium oxide (CaO), silicon dioxide (SiO2), iron(III) oxide (Fe2O3), aluminium(III) oxide (Al2O3), and magnesium oxide (MgO).

Preferably, the ash comprises calcium oxide (CaO), silicon dioxide (SiO2), iron(III) oxide (Fe2O3), aluminium(III) oxide (Al2O3), and magnesium oxide (MgO).

Optionally, the ash comprises at least 0.50, optionally at least 1.00, optionally at least 1.25, optionally at least 1.50, optionally at least 1.75, optionally at least 2.00, optionally at least 2.25, optionally at least 2.50, optionally at least 5.00, optionally at least 10.00, optionally at least 15.00, optionally at least 19.00, optionally at least 19.95, optionally at least 20.00, optionally at least 25.00, optionally at least 30.00, optionally at least 35.00, optionally at least 40.00, optionally at least 45.00 % (w/w) calcium oxide (CaO).

Optionally, the ash comprises at least 1.75 % (w/w) calcium oxide (CaO). Further optionally, the ash comprises at least 19.95 % (w/w) calcium oxide (CaO).

Preferably, the ash comprises at least 19.95 % (w/w) calcium oxide (CaO).

Optionally, the ash comprises at least 0.50, optionally at least 1.00, optionally at least 1.50, optionally at least 2.00, optionally at least 2.50, optionally at least 3.00, optionally at least 3.50, optionally at least 4.00, optionally at least 4.50, optionally at least 5.00, optionally at least 5.26, optionally at least 5.50, optionally at least 6.00, optionally at least 6.50, optionally at least 7.00, optionally at least 7.50, optionally at least 8.00, optionally at least 8.50, optionally at least 9.00, optionally at least 10.00, optionally at least 20.00, optionally at least 30.00, optionally at least 40.00, optionally at least 50.00, optionally at least 60.00, optionally at least 68.40, optionally at least 70.00, optionally at least 80.00, optionally at least 90.00 % (w/w) silicon dioxide (SiO2).

Optionally, the ash comprises at least 5.26 % (w/w) silicon dioxide (SiO2). Further optionally, the ash comprises at least 68.40 % (w/w) silicon dioxide (SiO2).

Preferably, the ash comprises at least 5.26 % (w/w) silicon dioxide (SiO2).

Optionally, the ash comprises at least 0.50, optionally at least 0.75, optionally at least 1.00, optionally at least 1.25, optionally at least 1.50, optionally at least 1.75, optionally at least 2.00, optionally at least 2.25, optionally at least 2.48, optionally at least 2.50, optionally at least 2.75, optionally at least 3.00, optionally at least 3.25, optionally at least 3.50, optionally at least 3.75, optionally at least 4.00, optionally at least 4.25, optionally at least 4.50, optionally at least 4.75, optionally at least 5.00, optionally at least 5.01, optionally at least 5.25, optionally at least 5.50, optionally at least 5.75, optionally at least 6.00 % (w/w) iron(III) oxide (Fe2O3).

Optionally, the ash comprises at least 2.48 % (w/w) iron(III) oxide (Fe2O3). Further optionally, the ash comprises at least 5.01 % (w/w) iron(III) oxide (Fe2O3).

Preferably, the ash comprises at least 2.48 % (w/w) iron(III) oxide (Fe2O3).

Optionally, the ash comprises at least 0.25, optionally at least 0.30, optionally at least 0.35, optionally at least 0.40, optionally at least 0.45, optionally at least 0.50, optionally at least 0.55, optionally at least 0.60, optionally at least 0.65, optionally at least 0.70, optionally at least 0.73, optionally at least 0.75, optionally at least 0.80, optionally at least 0.85, optionally at least 0.90, optionally at least 0.95, optionally at least 1.00, optionally at least 1.05, optionally at least 1.10, optionally at least 1.10, optionally at least 1.15, optionally at least 1.20, optionally at least 1.25, optionally at least 1.30, optionally at least 1.35, optionally at least 1.40 %, optionally at least 1.50, optionally at least 2.00, optionally at least 4.00, optionally at least 6.00, optionally at least 8.00, optionally at least 10.00, optionally at least 12.00, optionally at least 12.85, optionally at least 14.00, optionally at least 16.00, optionally at least 18.00 % (w/w) aluminium(III) oxide (Al2O3).

Optionally, the ash comprises at least 0.73 % (w/w) aluminium(III) oxide (Al2O3). Further optionally, the ash comprises at least 12.85 % (w/w) aluminium(III) oxide (Al2O3).

Preferably, the ash comprises at least 0.73 % (w/w) aluminium(III) oxide (Al2O3).

Optionally, the ash comprises at least 0.50, optionally at least 0.75, optionally at least 1.00, optionally at least 1.24, optionally at least 1.25, optionally at least 1.50, optionally at least 1.75, optionally at least 2.00, optionally at least 2.25, optionally at least 2.50, optionally at least 2.75, optionally at least 3.00, optionally at least 3.25, optionally at least 3.50, optionally at least 3.75, optionally at least 3.87, optionally at least 4.00, optionally at least 4.25, optionally at least 4.50, optionally at least 4.75, optionally at least 5.00 % (w/w) magnesium oxide (MgO).

Optionally, the ash comprises at least 1.24 % (w/w) magnesium oxide (MgO). Further optionally, the ash comprises at least 3.87 % (w/w) magnesium oxide (MgO).

Preferably, the ash comprises at least 3.87 % (w/w) magnesium oxide (MgO).

Optionally, the binding composition further comprises sodium hydroxide.

Optionally, the binding composition further comprises sodium hydroxide in a ratio to the ash of at least 1:5 (w/w, sodium hydroxide:ash).

Optionally, the binding composition further comprises sodium hydroxide in a ratio to the ash of at least 1:4 (w/w, sodium hydroxide:ash), optionally at least 1:3 (w/w, sodium hydroxide:ash).

Preferably, the binding composition further comprises sodium hydroxide in a ratio to the ash of at least 1:4 (w/w, sodium hydroxide:ash),
Optionally, the slag is selected from ferrous slag, ferroalloy slag, and non-ferrous/base metal slag.

Preferably, the slag is ferrous slag.

Optionally, the slag is selected from blast furnace slag, air-cooled blast furnace slag, basic oxygen furnace slag, and electric arc furnace slag.

Preferably, the slag is blast furnace slag.

Preferably, the slag is blast furnace ferrous slag.

Optionally, the slag is obtained from at least one of the calcining, roasting, smelting, and refining of ore.

Preferably, the slag is obtained from the smelting of ore.

Optionally, the calcining, roasting, smelting, or refining of ore comprises the extraction of metal.

Preferably, the smelting of ore comprises the extraction of metal.

Optionally, the calcining, roasting, smelting, or refining of ore comprises cooling the slag.

Optionally, the calcining, roasting, smelting, or refining of ore comprises cooling the slag to a temperature of less than 1200 deg.C, optionally less than 1100 deg.C, optionally less than 1000 deg.C, optionally less than 900 deg.C, optionally less than 800 deg.C, optionally less than 700 deg.C, optionally less than 600 deg.C, optionally less than 500 deg.C, optionally less than 400 deg.C.

Preferably, the calcining, roasting, smelting, or refining of ore comprises cooling the slag to a temperature of less than 800 deg.C.

Optionally, cooling the slag comprises quenching the slag.

Optionally, cooling the slag comprises quenching the slag by contacting the slag with a fluid. Further optionally, cooling the slag comprises quenching the slag by contacting the slag with a liquid or a gas. Still further optionally, cooling the slag comprises quenching the slag by contacting the slag with a fluid selected from water, steam, and air.

Optionally, the ore is a metallurgical ore.

Optionally, the ore comprises at least one metal selected from iron, copper, lead, nickel, bauxite, zinc, chromium, tin, manganese, silver, and mercury, or carbonates, sulfides, or oxides each thereof.

Optionally, the slag is in dry form. Further optionally, the slag is in powder form. Still further optionally, the slag is in dry powder form.

Optionally, the slag is in ground form. Further optionally, the slag is granulated form. Still further optionally, the slag is in milled form.

Optionally, the slag is in ground granulated form.

Preferably, the slag is in ground granulated form.

Optionally, at least part of the slag is amorphous. Further optionally, the slag is amorphous.

Optionally, at least part of the slag is crystalline. Further optionally, the slag is crystalline.

Optionally, at least part of the slag is amorphous and at least part of the slag is crystalline.

Optionally, the slag comprises at least one of calcium oxide (CaO), potassium oxide (K2O), silicon dioxide (SiO2), iron(III) oxide (Fe2O3), aluminium(III) oxide (Al2O3), magnesium oxide (MgO), manganese(II) oxide (MnO), titanium(IV) oxide (TiO2), sulfur trioxide (SO3), and chlorine (Cl).

Optionally, the slag comprises calcium oxide (CaO), potassium oxide (K2O), silicon dioxide (SiO2), iron(III) oxide (Fe2O3), aluminium(III) oxide (Al2O3), magnesium oxide (MgO), manganese(II) oxide (MnO), titanium(IV) oxide (TiO2), sulfur trioxide (SO3), and chlorine (Cl).

Optionally, the slag comprises calcium oxide (CaO), silicon dioxide (SiO2), iron(III) oxide (Fe2O3), aluminium(III) oxide (Al2O3), magnesium oxide (MgO), manganese(II) oxide (MnO), titanium(IV) oxide (TiO2), sulfur trioxide (SO3), and chlorine (Cl).

Preferably, the slag comprises calcium oxide (CaO), silicon dioxide (SiO2), iron(III) oxide (Fe2O3), aluminium(III) oxide (Al2O3), magnesium oxide (MgO), manganese(II) oxide (MnO), titanium(IV) oxide (TiO2), sulfur trioxide (SO3), and chlorine (Cl).

Optionally, the slag comprises at least 10.0, optionally at least 15.0, optionally at least 20.0, optionally at least 25.0, optionally at least 30.0, optionally at least 35.0, optionally at least 40.0, optionally at least 42.4, optionally at least 45.0, optionally at least 50.0, optionally at least 55.0, optionally at least 60.0, optionally at least 65.0, optionally at least 70.0, optionally at least 75.0, optionally at least 80.0 % (w/w) calcium oxide (CaO).

Preferably, the slag comprises at least 42.4 % (w/w) calcium oxide (CaO).

Optionally, the slag comprises at least 10.0, optionally at least 15.0, optionally at least 20.0, optionally at least 25.0, optionally at least 30.0, optionally at least 35.0, optionally at least 36.5, optionally at least 40.0, optionally at least 45.0, optionally at least 50.0, optionally at least 55.0, optionally at least 60.0, optionally at least 65.0, optionally at least 70.0 % (w/w) silicon dioxide (SiO2).

Preferably, the slag comprises at least 36.5 % (w/w) silicon dioxide (SiO2).

Optionally, the slag comprises at least 0.1, optionally at least 0.2, optionally at least 0.3, optionally at least 0.4, optionally at least 0.5, optionally at least 0.6, optionally at least 0.7, optionally at least 0.8, optionally at least 0.9, optionally at least 1.0, optionally at least 1.1, optionally at least 1.2, optionally at least 1.3, optionally at least 1.4 % (w/w) iron(III) oxide (Fe2O3).

Preferably, the slag comprises at least 0.7 % (w/w) iron(III) oxide (Fe2O3).

Optionally, the slag comprises at least 5.0, optionally at least 6.0, optionally at least 7.0, optionally at least 8.0, optionally at least 9.0, optionally at least 10.0, optionally at least 10.4, optionally at least 11.0, optionally at least 12.0, optionally at least 13.0, optionally at least 14.0, optionally at least 15.0 % (w/w) aluminium(III) oxide (Al2O3).

Preferably, the slag comprises at least 10.4 % (w/w) aluminium(III) oxide (Al2O3).

Optionally, the slag comprises at least 4.0, optionally at least 5.0, optionally at least 6.0, optionally at least 7.0, optionally at least 8.0, optionally at least 8.1, optionally at least 9.0, optionally at least 10.0, optionally at least 11.0, optionally at least 12.0 % (w/w) magnesium oxide (MgO).

Preferably, the slag comprises at least 8.1 % (w/w) magnesium oxide (MgO).

Optionally, the slag comprises at least 0.1, optionally at least 0.2, optionally at least 0.3, optionally at least 0.4, optionally at least 0.5, optionally at least 0.6, optionally at least 0.7, optionally at least 0.8 % (w/w) manganese(II) oxide (MnO).

Preferably, the slag comprises at least 0.4 % (w/w) manganese(II) oxide (MnO).

Optionally, the slag comprises at least 0.1, optionally at least 0.2, optionally at least 0.3, optionally at least 0.4, optionally at least 0.5, optionally at least 0.6, optionally at least 0.7, optionally at least 0.8, optionally at least 0.9, optionally at least 0.10 % (w/w) titanium(IV) oxide (TiO2).

Preferably, the slag comprises at least at least 0.5 % (w/w) titanium(IV) oxide (TiO2).

Optionally, the slag comprises at least 0.01, optionally at least 0.25, optionally at least 0.05, optionally at least 0.75, optionally at least 1.0, optionally at least 1.25, optionally at least 1.50 % (w/w) sulfur trioxide (SO3).

Preferably, the slag comprises at least 0.1 % (w/w) sulfur trioxide (SO3).

Optionally, the slag comprises at least 0.001, optionally at least 0.025, optionally at least 0.050, optionally at least 0.075, optionally at least 0.010, optionally at least 0.012, optionally at least 0.015 % (w/w) chlorine (Cl).

Preferably, the slag comprises at least 0.01 % (w/w) chlorine (Cl).

Optionally, the binding composition further comprises at least one activator.

Optionally, the at least one activator is a carbonate or hydrates thereof.

Optionally, the at least one activator is sodium carbonate (Na2CO3) or hydrates thereof.

Optionally, the sodium carbonate (Na2CO3) or hydrates thereof is in dry form. Further optionally, the sodium carbonate (Na2CO3) or hydrates thereof is in powder form. Still further optionally, the sodium carbonate (Na2CO3) or hydrates thereof is in dry powder form.

Optionally, the at least one activator is a silicate.

Optionally, the at least one activator is a sodium silicate.

Optionally, the at least one activator is a neutral sodium silicate or an alkaline sodium silicate.

Optionally, the at least one activator is a sodium silicate selected from sodium metasilicate (Na2SiO3), sodium orthosilicate (Na4SiO4), and sodium pyrosilicate (Na6Si2O7).

Optionally, the at least one activator is a calcium silicate.

Optionally, the at least one activator is a calcium silicate selected from 3 CaO·SiO2, 2 CaO·SiO2, and combinations thereof.

Optionally, the at least one activator is composition comprising the calcium silicate.

Optionally, the at least one activator is a Portland cement.

Optionally, the at least one activator is a carbonate or hydrates thereof and a silicate.

Optionally, the binding composition further comprises the at least one activator in an amount of at least 1 % (w/w) relative to the mixture of ash and slag.

Further optionally, the binding composition further comprises the at least one activator in an amount of at least 1, optionally at least 2, optionally at least 3, optionally at least 4, optionally at least 5, optionally at least 6, optionally at least 7, optionally at least 8, optionally at least 9, optionally at least 10, optionally at least 11, optionally at least 12, optionally at least 13, optionally at least 14, optionally at least 15, optionally at least 16, optionally at least 17, optionally at least 18, optionally at least 19, optionally at least 20, optionally at least 21, optionally at least 22, optionally at least 23, optionally at least 24, optionally at least 25 % (w/w) relative to the mixture of ash and slag.

Still further optionally, the binding composition further comprises the at least one activator in an amount of at least 4 % (w/w) relative to the mixture of ash and slag.

Still further optionally, the binding composition further comprises the at least one activator in an amount of at least 5 % (w/w) relative to the mixture of ash and slag.

Still further optionally, the binding composition further comprises the at least one activator in an amount of at least 10 % (w/w) relative to the mixture of ash and slag.

Still further optionally, the binding composition further comprises the at least one activator in an amount of at least 14 % (w/w) relative to the mixture of ash and slag.

Still further optionally, the binding composition further comprises the at least one activator in an amount of at least 25 % (w/w) relative to the mixture of ash and slag.

Preferably, the binding composition further comprises the at least one activator in an amount of at least 10 % (w/w) relative to the mixture of ash and slag.

Optionally, the binding composition further comprises water.

Optionally, the binding composition further comprises water in a ratio to the mixture of ash and slag of at least 1:1 (w/w, water:ash+slag).

Further optionally, the binding composition further comprises water in a ratio to the mixture of ash and slag of at least 1:2 (w/w, water:ash+slag).

Preferably, the binding composition further comprises water in a ratio to the mixture of ash and slag of 1:2 (w/w, water:ash+slag).

Optionally, the binding composition further comprises at least one aggregate.

Optionally, the at least one aggregate is sand.

Optionally, the binding composition further comprises at least one aggregate in a ratio to the mixture of ash and slag of at least 1:3 (w/w, aggregate:ash+slag).

Further optionally, the binding composition further comprises at least one aggregate in a ratio to the mixture of ash and slag of at least 1:2 (w/w, aggregate:ash+slag), optionally at least 1:1 (w/w, aggregate:ash+slag), optionally at least 2:1 (w/w, aggregate:ash+slag), optionally at least 3:1 (w/w, aggregate:ash+slag).

Still further optionally, the binding composition further comprises at least one aggregate in a ratio to the mixture of ash and slag of at least 2:1 (w/w, aggregate:ash+slag), optionally at least 3:1 (w/w, aggregate:ash+slag).

Preferably, the binding composition further comprises at least one aggregate in a ratio to the mixture of ash and slag of 2:1 (w/w, aggregate:ash+slag).

According to a second aspect of the present invention there is provided a method for preparing a binding composition, the method comprising:
(a) providing ash;
(b) providing slag; and
(c) admixing the ash and slag to provide a mixture of ash and slag.

Optionally, the admixing step comprises admixing the ash and slag in a ratio of at least 10:90 (w/w, ash:slag).

Further optionally, the admixing step comprises admixing the ash and slag in a ratio of at least 20:80 (w/w, ash:slag), optionally at least 30:70 (w/w, ash:slag), optionally at least 40:60 (w/w, ash:slag), optionally at least 50:50 (w/w, ash:slag), optionally at least 60:40 (w/w, ash:slag), optionally at least 70:30 (w/w, ash:slag), optionally at least 80:20 (w/w, ash:slag), optionally at least 90:10 (w/w, ash:slag).

Still further optionally, the admixing step comprises admixing the ash and slag in a ratio of at least 30:70 (w/w, ash:slag), optionally at least 40:60 (w/w, ash:slag).

Preferably, the admixing step comprises admixing the ash and slag in a ratio of at least 40:60 (w/w, ash:slag).

Optionally, the admixing step comprises admixing the ash and slag in a ratio of between 10:90 (w/w, ash:slag) and 90:10 (w/w, ash:slag), optionally between 20:80 (w/w, ash:slag) and 80:20 (w/w, ash:slag), optionally between 30:70 (w/w, ash:slag) and 70:30 (w/w, ash:slag), optionally between 40:60 (w/w, ash:slag) and 60:40 (w/w, ash:slag).

Further optionally, the admixing step comprises admixing the ash and slag in a ratio of between 30:70 (w/w, ash:slag) and 70:30 (w/w, ash:slag), optionally between 40:60 (w/w, ash:slag) and 60:40 (w/w, ash:slag).

Preferably, the admixing step comprises admixing the ash and slag in a ratio of between 40:60 (w/w, ash:slag) and 60:40 (w/w, ash:slag).

Optionally, the admixing step comprises admixing the ash and slag in a ratio of 10:90 (w/w, ash:slag).

Further optionally, the admixing step comprises admixing the ash and slag in a ratio of 20:80 (w/w, ash:slag), optionally 30:70 (w/w, ash:slag), optionally 40:60 (w/w, ash:slag), optionally 50:50 (w/w, ash:slag), optionally 60:40 (w/w, ash:slag), optionally 70:30 (w/w, ash:slag), optionally 80:20 (w/w, ash:slag), optionally 90:10 (w/w, ash:slag).

Further optionally, the admixing step comprises admixing the ash and slag in a ratio of 20:80 (w/w, ash:slag), optionally 30:70 (w/w, ash:slag), optionally 40:60 (w/w, ash:slag), optionally 50:50 (w/w, ash:slag), optionally 60:40 (w/w, ash:slag), optionally 70:30 (w/w, ash:slag), optionally 80:20 (w/w, ash:slag), optionally 90:10 (w/w, ash:slag).

Still further optionally, the admixing step comprises admixing the ash and slag in a ratio of 30:70 (w/w, ash:slag) or 40:60 (w/w, ash:slag).

Preferably, the admixing step comprises admixing the ash and slag in a ratio of 40:60 (w/w, ash:slag).

Optionally, the admixing step comprises grinding the ash and slag. Further optionally, the admixing step comprises milling the ash and slag. Still further optionally, the admixing step comprises ball milling the ash and slag.

Optionally, the admixing step comprises grinding the ash and slag for at least 10 minutes.

Further optionally, the admixing step comprises grinding the ash and slag for at least 20 minutes, optionally at least 30 minutes, optionally at least 40 minutes, optionally at least 50 minutes, optionally at least 60 minutes, optionally at least 70 minutes, optionally at least 80 minutes, optionally at least 90 minutes, optionally at least 100 minutes, optionally at least 110 minutes, optionally at least 120 minutes, optionally at least 130 minutes, optionally at least 140 minutes, optionally at least 150 minutes.

Preferably, the admixing step comprises grinding the ash and slag for at least 60 minutes.

Optionally, the providing ash step comprises the combustion of biomass. Further optionally, the providing ash step comprises the uncontrolled combustion of biomass.

Optionally, the ash is biomass ash.

Preferably, the ash is biomass ash.

Optionally, the biomass comprises wood, wood or woody residues, agricultural residues, herbaceous residues, or combinations thereof.

Optionally, the biomass comprises straw, maize, switchgrass, miscanthus and bamboo.

Optionally, the biomass comprises oil cake. Further optionally, the biomass comprises seed oil cake. Still further optionally, the biomass comprises olive oil cake.

Optionally, the biomass comprises seed husk. Further optionally, the biomass comprises rice husk.

Optionally, the biomass comprises corn straw. Further optionally, the biomass comprises at least one of corn leaves, stalks, and cobs.

Optionally, the providing ash step comprises drying the ash. Further optionally, the providing ash step comprises reducing the particle size of the ash.

Optionally, the method comprises:
(a) providing ash;
(b) reducing the particle size of the ash;
(c) providing slag; and
(d) admixing the ash and slag to provide a mixture of ash and slag.

Optionally, the providing ash step comprises grinding the ash. Further optionally, the providing ash step comprises milling the ash. Still further optionally, the providing ash step comprises ball milling the ash.

Optionally, the providing ash step comprises grinding the ash for at least 10 minutes.

Further optionally, the providing ash step comprises grinding the ash for at least 20 minutes, optionally at least 30 minutes, optionally at least 40 minutes, optionally at least 50 minutes, optionally at least 60 minutes, optionally at least 70 minutes, optionally at least 80 minutes, optionally at least 90 minutes, optionally at least 100 minutes, optionally at least 110 minutes, optionally at least 120 minutes, optionally at least 130 minutes, optionally at least 140 minutes, optionally at least 150 minutes.

Preferably, the providing ash step comprises grinding the ash for at least 120 minutes.

Optionally, at least part of the ash is amorphous. Further optionally, the ash is amorphous.

Optionally, at least part of the ash is crystalline. Further optionally, the ash is crystalline.

Optionally, at least part of the ash is amorphous and at least part of the ash is crystalline.

Optionally, the ash comprises at least one carbonate.

Optionally, the ash comprises at least one salt of carbonic acid.

Optionally, the ash comprises at least one carbonate mineral.

Optionally, the at least one carbonate is selected from calcite (CaCO3), kalicinite (KHCO3), fairchildite (K2Ca(CO3)2), butschliite (K2Ca(CO3)2), baylissite (K2Mg(CO3)2.4H2O), and kutnahorite (Ca(Mn,Mg,Fe)CO3).

Further optionally, the at least one carbonate is selected from calcite (CaCO3) and butschliite (K2Ca(CO3)2).

Still further optionally, the at least one carbonate is calcite (CaCO3) and butschliite (K2Ca(CO3)2).

Preferably, the at least one carbonate is calcite (CaCO3) and butschliite (K2Ca(CO3)2).

Optionally, the ash comprises at least one silicate.

Optionally, the ash comprises at least one silicate mineral.

Optionally, the at least one silicate is selected from microcline (KAISi3O8), anorthite (CaAl2Si2O8), wollastonite (CaSiO3), akermanite (Ca2MgSi2O7), merwinite (Ca3Mg(SiO4)2), flamite ( Ca8-x(Na,K)x(SiO4)4-x(PO4)x), enstatite (MgSiO3), hedenbergite (CaFe2+Si2O6), diopside (CaMgSi2O6), akermanite (Ca2MgSi2O7), orthoclase (KAlSi3O8), and sodalite (Na4[Cl|(AlSiO4)3]).

Further optionally, the at least one silicate is selected from merwinite (Ca3Mg(SiO4)2) and enstatite (MgSiO3).

Still further optionally, the at least one silicate is merwinite (Ca3Mg(SiO4)2) and enstatite (MgSiO3).

Preferably, the at least one silicate is merwinite (Ca3Mg(SiO4)2) and enstatite (MgSiO3).

Optionally, the ash comprises calcite (CaCO3), butschliite (K2Ca(CO3)2), merwinite (Ca3Mg(SiO4)2), and enstatite (MgSiO3).

Preferably, the ash comprises calcite (CaCO3), butschliite (K2Ca(CO3)2), merwinite (Ca3Mg(SiO4)2), and enstatite (MgSiO3).

Optionally, the ash comprises at least one electrolyte.

Optionally, the at least one electrolyte is selected from sodium, potassium, chloride, magnesium, calcium, and phosphate.

Further optionally, the at least one electrolyte is selected from potassium, magnesium, calcium, and phosphate.

Still further optionally, the at least one electrolyte is potassium, magnesium, calcium, and phosphate.

Preferably, the at least one electrolyte is potassium, magnesium, calcium, and phosphate.

Optionally, the ash comprises calcite (CaCO3), butschliite (K2Ca(CO3)2), merwinite (Ca3Mg(SiO4)2), enstatite (MgSiO3), potassium, magnesium, calcium, and phosphate.

Preferably, the ash comprises calcite (CaCO3), butschliite (K2Ca(CO3)2), merwinite (Ca3Mg(SiO4)2), enstatite (MgSiO3), potassium, magnesium, calcium, and phosphate.

Optionally, the ash comprises at least one of calcium oxide (CaO), potassium oxide (K2O), silicon dioxide (SiO2), iron(III) oxide (Fe2O3), aluminium(III) oxide (Al2O3), magnesium oxide (MgO), manganese(II) oxide (MnO), titanium(IV) oxide (TiO2), sulfur trioxide (SO3), and chlorine (Cl).

Further optionally, the ash comprises at least one of calcium oxide (CaO) and potassium oxide (K2O).

Still further optionally, the ash comprises at least one of calcium oxide (CaO), potassium oxide (K2O), silicon dioxide (SiO2), and iron(III) oxide (Fe2O3).

Still further optionally, the ash comprises at least one of calcium oxide (CaO), potassium oxide (K2O), silicon dioxide (SiO2), iron(III) oxide (Fe2O3), aluminium(III) oxide (Al2O3), and magnesium oxide (MgO).

Still further optionally, the ash comprises calcium oxide (CaO), potassium oxide (K2O), silicon dioxide (SiO2), iron(III) oxide (Fe2O3), aluminium(III) oxide (Al2O3), and magnesium oxide (MgO).

Still further optionally, the ash comprises calcium oxide (CaO), silicon dioxide (SiO2), iron(III) oxide (Fe2O3), aluminium(III) oxide (Al2O3), and magnesium oxide (MgO).

Preferably, the ash comprises calcium oxide (CaO), silicon dioxide (SiO2), iron(III) oxide (Fe2O3), aluminium(III) oxide (Al2O3), and magnesium oxide (MgO).

Optionally, the ash comprises at least 0.50, optionally at least 1.00, optionally at least 1.25, optionally at least 1.50, optionally at least 1.75, optionally at least 2.00, optionally at least 2.25, optionally at least 2.50, optionally at least 5.00, optionally at least 10.00, optionally at least 15.00, optionally at least 19.00, optionally at least 19.95, optionally at least 20.00, optionally at least 25.00, optionally at least 30.00, optionally at least 35.00, optionally at least 40.00, optionally at least 45.00 % (w/w) calcium oxide (CaO).

Optionally, the ash comprises at least 1.75 % (w/w) calcium oxide (CaO). Further optionally, the ash comprises at least 19.95 % (w/w) calcium oxide (CaO).

Preferably, the ash comprises at least 19.95 % (w/w) calcium oxide (CaO).

Optionally, the ash comprises at least 0.50, optionally at least 1.00, optionally at least 1.50, optionally at least 2.00, optionally at least 2.50, optionally at least 3.00, optionally at least 3.50, optionally at least 4.00, optionally at least 4.50, optionally at least 5.00, optionally at least 5.26, optionally at least 5.50, optionally at least 6.00, optionally at least 6.50, optionally at least 7.00, optionally at least 7.50, optionally at least 8.00, optionally at least 8.50, optionally at least 9.00, optionally at least 10.00, optionally at least 20.00, optionally at least 30.00, optionally at least 40.00, optionally at least 50.00, optionally at least 60.00, optionally at least 68.40, optionally at least 70.00, optionally at least 80.00, optionally at least 90.00 % (w/w) silicon dioxide (SiO2).

Optionally, the ash comprises at least 5.26 % (w/w) silicon dioxide (SiO2). Further optionally, the ash comprises at least 68.40 % (w/w) silicon dioxide (SiO2).

Preferably, the ash comprises at least 5.26 % (w/w) silicon dioxide (SiO2).

Optionally, the ash comprises at least 0.50, optionally at least 0.75, optionally at least 1.00, optionally at least 1.25, optionally at least 1.50, optionally at least 1.75, optionally at least 2.00, optionally at least 2.25, optionally at least 2.48, optionally at least 2.50, optionally at least 2.75, optionally at least 3.00, optionally at least 3.25, optionally at least 3.50, optionally at least 3.75, optionally at least 4.00, optionally at least 4.25, optionally at least 4.50, optionally at least 4.75, optionally at least 5.00, optionally at least 5.01, optionally at least 5.25, optionally at least 5.50, optionally at least 5.75, optionally at least 6.00 % (w/w) iron(III) oxide (Fe2O3).

Optionally, the ash comprises at least 2.48 % (w/w) iron(III) oxide (Fe2O3). Further optionally, the ash comprises at least 5.01 % (w/w) iron(III) oxide (Fe2O3).

Preferably, the ash comprises at least 2.48 % (w/w) iron(III) oxide (Fe2O3).

Optionally, the ash comprises at least 0.25, optionally at least 0.30, optionally at least 0.35, optionally at least 0.40, optionally at least 0.45, optionally at least 0.50, optionally at least 0.55, optionally at least 0.60, optionally at least 0.65, optionally at least 0.70, optionally at least 0.73, optionally at least 0.75, optionally at least 0.80, optionally at least 0.85, optionally at least 0.90, optionally at least 0.95, optionally at least 1.00, optionally at least 1.05, optionally at least 1.10, optionally at least 1.10, optionally at least 1.15, optionally at least 1.20, optionally at least 1.25, optionally at least 1.30, optionally at least 1.35, optionally at least 1.40 %, optionally at least 1.50, optionally at least 2.00, optionally at least 4.00, optionally at least 6.00, optionally at least 8.00, optionally at least 10.00, optionally at least 12.00, optionally at least 12.85, optionally at least 14.00, optionally at least 16.00, optionally at least 18.00 % (w/w) aluminium(III) oxide (Al2O3).

Optionally, the ash comprises at least 0.73 % (w/w) aluminium(III) oxide (Al2O3). Further optionally, the ash comprises at least 12.85 % (w/w) aluminium(III) oxide (Al2O3).

Preferably, the ash comprises at least 0.73 % (w/w) aluminium(III) oxide (Al2O3).

Optionally, the ash comprises at least 0.50, optionally at least 0.75, optionally at least 1.00, optionally at least 1.24, optionally at least 1.25, optionally at least 1.50, optionally at least 1.75, optionally at least 2.00, optionally at least 2.25, optionally at least 2.50, optionally at least 2.75, optionally at least 3.00, optionally at least 3.25, optionally at least 3.50, optionally at least 3.75, optionally at least 3.87, optionally at least 4.00, optionally at least 4.25, optionally at least 4.50, optionally at least 4.75, optionally at least 5.00 % (w/w) magnesium oxide (MgO).

Optionally, the ash comprises at least 1.24 % (w/w) magnesium oxide (MgO). Further optionally, the ash comprises at least 3.87 % (w/w) magnesium oxide (MgO).

Preferably, the ash comprises at least 3.87 % (w/w) magnesium oxide (MgO).

Optionally, the providing ash step comprises calcining the ash.

Optionally, the method comprises:
(a) providing ash;
(b) calcining the ash;
(c) providing slag; and
(d) admixing the ash and slag to provide a mixture of ash and slag.

Optionally, the method comprises:
(a) providing ash;
(b) reducing the particle size of the ash;
(c) calcining the ash;
(d) providing slag; and
(e) admixing the ash and slag to provide a mixture of ash and slag.

Optionally, the calcining the ash step comprises calcining the ash in the presence of sodium hydroxide.

Optionally, the calcining the ash step comprises contacting the ash with sodium hydroxide.

Optionally, the calcining the ash step comprises contacting the ash with sodium hydroxide in a ratio to the ash of at least 1:5 (w/w, sodium hydroxide:ash).

Optionally, the calcining the ash step comprises contacting the ash with sodium hydroxide in a ratio to the ash of at least 1:4 (w/w, sodium hydroxide:ash), optionally at least 1:3 (w/w, sodium hydroxide:ash).

Preferably, the calcining the ash step comprises contacting the ash with sodium hydroxide in a ratio to the ash of at least 1:4 (w/w, sodium hydroxide:ash).

Optionally, the calcining the ash step is conducted for at least 30 minutes. Further optionally, the calcining the ash step is conducted for at least 60 minutes, optionally at least 90 minutes, optionally at least 120 minutes, optionally at least 150 minutes, optionally at least 180 minutes, optionally at least 210 minutes, optionally at least 240 minutes.

Preferably, the calcining the ash step is conducted for 120 minutes.

Optionally, the calcining the ash step is conducted at a temperature of at least 450 deg.C. Further optionally, the calcining the ash step is conducted at a temperature of at least 500 deg.C, optionally a temperature of at least 600 deg.C, optionally a temperature of at least 700 deg.C, optionally a temperature of at least 800 deg.C.

Preferably, the calcining the ash step is conducted for a temperature of at least 600 deg.C.

Optionally, the slag is selected from ferrous slag, ferroalloy slag, and non-ferrous/base metal slag.

Preferably, the slag is ferrous slag.

Optionally, the slag is selected from blast furnace slag, air-cooled blast furnace slag, basic oxygen furnace slag, and electric arc furnace slag.

Preferably, the slag is blast furnace slag.

Preferably, the slag is blast furnace ferrous slag.

Optionally, the providing slag step comprises at least one of the calcining, roasting, smelting, and refining of ore.

Preferably, the providing slag step comprises the smelting of ore.

Optionally, the providing slag step comprises the extracting metal.

Preferably, the providing slag step comprises extracting metal.

Optionally, the providing slag step comprises cooling the slag.

Optionally, the providing slag step comprises cooling the slag to a temperature of less than 1200 deg.C, optionally less than 1100 deg.C, optionally less than 1000 deg.C, optionally less than 900 deg.C, optionally less than 800 deg.C, optionally less than 700 deg.C, optionally less than 600 deg.C, optionally less than 500 deg.C, optionally less than 400 deg.C.

Preferably, the providing slag step comprises cooling the slag to a temperature of less than 800 deg.C.

Optionally, cooling the slag comprises quenching the slag.

Optionally, cooling the slag comprises quenching the slag by contacting the slag with a fluid. Further optionally, cooling the slag comprises quenching the slag by contacting the slag with a liquid or a gas. Still further optionally, cooling the slag comprises quenching the slag by contacting the slag with a fluid selected from water, steam, and air.

Optionally, the ore is a metallurgical ore.

Optionally, the ore comprises at least one metal selected from iron, copper, lead, nickel, bauxite, zinc, chromium, tin, manganese, silver, and mercury, or carbonates, sulfides, or oxides each thereof.

Optionally, the providing slag step comprises drying the slag. Further optionally, the providing slag step comprises reducing the particle size of the slag.

Optionally, the providing slag step comprises grinding the slag. Further optionally, the providing slag step comprises granulating the slag. Still further optionally, the providing slag step comprises milling the slag.

Optionally, the providing slag step comprises grinding and granulating the slag.

Preferably, the providing slag step comprises grinding and granulating the slag.

Optionally, the providing slag step comprises grinding the ash for at least 10 minutes.

Further optionally, the providing slag step comprises grinding the ash for at least 20 minutes, optionally at least 30 minutes, optionally at least 40 minutes, optionally at least 50 minutes, optionally at least 60 minutes, optionally at least 70 minutes, optionally at least 80 minutes, optionally at least 90 minutes, optionally at least 100 minutes, optionally at least 110 minutes, optionally at least 120 minutes, optionally at least 130 minutes, optionally at least 140 minutes, optionally at least 150 minutes.

Preferably, the providing slag step comprises grinding the ash for at least 120 minutes.

Optionally, at least part of the slag is amorphous. Further optionally, the slag is amorphous.

Optionally, at least part of the slag is crystalline. Further optionally, the slag is crystalline.

Optionally, at least part of the slag is amorphous and at least part of the slag is crystalline.

Optionally, the slag comprises at least one of calcium oxide (CaO), potassium oxide (K2O), silicon dioxide (SiO2), iron(III) oxide (Fe2O3), aluminium(III) oxide (Al2O3), magnesium oxide (MgO), manganese(II) oxide (MnO), titanium(IV) oxide (TiO2), sulfur trioxide (SO3), and chlorine (Cl).

Optionally, the slag comprises calcium oxide (CaO), potassium oxide (K2O), silicon dioxide (SiO2), iron(III) oxide (Fe2O3), aluminium(III) oxide (Al2O3), magnesium oxide (MgO), manganese(II) oxide (MnO), titanium(IV) oxide (TiO2), sulfur trioxide (SO3), and chlorine (Cl).

Optionally, the slag comprises calcium oxide (CaO), silicon dioxide (SiO2), iron(III) oxide (Fe2O3), aluminium(III) oxide (Al2O3), magnesium oxide (MgO), manganese(II) oxide (MnO), titanium(IV) oxide (TiO2), sulfur trioxide (SO3), and chlorine (Cl).

Preferably, the slag comprises calcium oxide (CaO), silicon dioxide (SiO2), iron(III) oxide (Fe2O3), aluminium(III) oxide (Al2O3), magnesium oxide (MgO), manganese(II) oxide (MnO), titanium(IV) oxide (TiO2), sulfur trioxide (SO3), and chlorine (Cl).

Optionally, the slag comprises at least 10.0, optionally at least 15.0, optionally at least 20.0, optionally at least 25.0, optionally at least 30.0, optionally at least 35.0, optionally at least 40.0, optionally at least 42.4, optionally at least 45.0, optionally at least 50.0, optionally at least 55.0, optionally at least 60.0, optionally at least 65.0, optionally at least 70.0, optionally at least 75.0, optionally at least 80.0 % (w/w) calcium oxide (CaO).

Preferably, the slag comprises at least 42.4 % (w/w) calcium oxide (CaO).

Optionally, the slag comprises at least 10.0, optionally at least 15.0, optionally at least 20.0, optionally at least 25.0, optionally at least 30.0, optionally at least 35.0, optionally at least 36.5, optionally at least 40.0, optionally at least 45.0, optionally at least 50.0, optionally at least 55.0, optionally at least 60.0, optionally at least 65.0, optionally at least 70.0 % (w/w) silicon dioxide (SiO2).

Preferably, the slag comprises at least 36.5 % (w/w) silicon dioxide (SiO2).

Optionally, the slag comprises at least 0.1, optionally at least 0.2, optionally at least 0.3, optionally at least 0.4, optionally at least 0.5, optionally at least 0.6, optionally at least 0.7, optionally at least 0.8, optionally at least 0.9, optionally at least 1.0, optionally at least 1.1, optionally at least 1.2, optionally at least 1.3, optionally at least 1.4 % (w/w) iron(III) oxide (Fe2O3).

Preferably, the slag comprises at least 0.7 % (w/w) iron(III) oxide (Fe2O3).

Optionally, the slag comprises at least 5.0, optionally at least 6.0, optionally at least 7.0, optionally at least 8.0, optionally at least 9.0, optionally at least 10.0, optionally at least 10.4, optionally at least 11.0, optionally at least 12.0, optionally at least 13.0, optionally at least 14.0, optionally at least 15.0 % (w/w) aluminium(III) oxide (Al2O3).

Preferably, the slag comprises at least 10.4 % (w/w) aluminium(III) oxide (Al2O3).

Optionally, the slag comprises at least 4.0, optionally at least 5.0, optionally at least 6.0, optionally at least 7.0, optionally at least 8.0, optionally at least 8.1, optionally at least 9.0, optionally at least 10.0, optionally at least 11.0, optionally at least 12.0 % (w/w) magnesium oxide (MgO).

Preferably, the slag comprises at least 8.1 % (w/w) magnesium oxide (MgO).

Optionally, the slag comprises at least 0.1, optionally at least 0.2, optionally at least 0.3, optionally at least 0.4, optionally at least 0.5, optionally at least 0.6, optionally at least 0.7, optionally at least 0.8 % (w/w) manganese(II) oxide (MnO).

Preferably, the slag comprises at least 0.4 % (w/w) manganese(II) oxide (MnO).

Optionally, the slag comprises at least 0.1, optionally at least 0.2, optionally at least 0.3, optionally at least 0.4, optionally at least 0.5, optionally at least 0.6, optionally at least 0.7, optionally at least 0.8, optionally at least 0.9, optionally at least 0.10 % (w/w) titanium(IV) oxide (TiO2).

Preferably, the slag comprises at least at least 0.5 % (w/w) titanium(IV) oxide (TiO2).

Optionally, the slag comprises at least 0.01, optionally at least 0.25, optionally at least 0.05, optionally at least 0.75, optionally at least 1.0, optionally at least 1.25, optionally at least 1.50 % (w/w) sulfur trioxide (SO3).

Preferably, the slag comprises at least 0.1 % (w/w) sulfur trioxide (SO3).

Optionally, the slag comprises at least 0.001, optionally at least 0.025, optionally at least 0.050, optionally at least 0.075, optionally at least 0.010, optionally at least 0.012, optionally at least 0.015 % (w/w) chlorine (Cl).

Preferably, the slag comprises at least 0.01 % (w/w) chlorine (Cl).

Optionally, the method further comprises admixing at least one activator. Further optionally, the method further comprises admixing at least one activator with the ash and slag. Still further optionally, the method further comprises admixing at least one activator with the mixture of ash and slag.

Optionally, the method comprises:
(a) providing ash;
(b) providing slag; and
(c) admixing the ash and slag to provide a mixture of ash and slag; and
(d) admixing at least one activator.

Optionally, the method comprises:
(a) providing ash;
(b) calcining the ash;
(c) providing slag;
(d) admixing the ash and slag to provide a mixture of ash and slag; and
(e) admixing at least one activator.

Optionally, the method comprises:
(a) providing ash;
(b) reducing the particle size of the ash;
(c) calcining the ash;
(d) providing slag;
(e) admixing the ash and slag to provide a mixture of ash and slag; and
(f) admixing at least one activator.

Optionally, the at least one activator is a carbonate or hydrates thereof.

Optionally, the at least one activator is sodium carbonate (Na2CO3) or hydrates thereof.

Optionally, the sodium carbonate (Na2CO3) or hydrates thereof is in dry form. Further optionally, the sodium carbonate (Na2CO3) or hydrates thereof is in powder form. Still further optionally, the sodium carbonate (Na2CO3) or hydrates thereof is in dry powder form.

Optionally, the at least one activator is a silicate.

Optionally, the at least one activator is a sodium silicate.

Optionally, the at least one activator is a neutral sodium silicate or an alkaline sodium silicate.

Optionally, the at least one activator is a sodium silicate selected from sodium metasilicate (Na2SiO3), sodium orthosilicate (Na4SiO4), and sodium pyrosilicate (Na6Si2O7).

Optionally, the at least one activator is a carbonate or hydrates thereof and a silicate.

Optionally, the method further comprises admixing at least one activator in an amount of at least 1 % (w/w) relative to the mixture of ash and slag.

Further optionally, the method further comprises admixing at least one activator in an amount of at least 1, optionally at least 2, optionally at least 3, optionally at least 4, optionally at least 5, optionally at least 6, optionally at least 7, optionally at least 8, optionally at least 9, optionally at least 10, optionally at least 11, optionally at least 12, optionally at least 13, optionally at least 14, optionally at least 15, optionally at least 16, optionally at least 17, optionally at least 18, optionally at least 19, optionally at least 20, optionally at least 21, optionally at least 22, optionally at least 23, optionally at least 24, optionally at least 25 % (w/w) relative to the mixture of ash and slag.

Still further optionally, the method further comprises admixing at least one activator in an amount of at least 4 % (w/w) relative to the mixture of ash and slag.

Still further optionally, the method further comprises admixing at least one activator in an amount of at least 5 % (w/w) relative to the mixture of ash and slag.

Still further optionally, the method further comprises admixing at least one activator in an amount of at least 10% (w/w) relative to the mixture of ash and slag.

Still further optionally, the method further comprises admixing at least one activator in an amount of at least 14 % (w/w) relative to the mixture of ash and slag.

Still further optionally, the method further comprises admixing at least one activator in an amount of at least 25 % (w/w) relative to the mixture of ash and slag.

Preferably, the method further comprises admixing at least one activator in an amount of at least 10 % (w/w) relative to the mixture of ash and slag.

Optionally, the method further comprises admixing water. Further optionally, the method further comprises admixing water with the ash and slag. Still further optionally, the method further comprises admixing water with the mixture of ash and slag.

Optionally, the method comprises:
(a) providing ash;
(b) providing slag;
(c) admixing the ash and slag to provide a mixture of ash and slag; and
(d) admixing water.

Optionally, the method comprises:
(a) providing ash;
(b) providing slag;
(c) admixing the ash and slag to provide a mixture of ash and slag;
(d) admixing at least one activator; and
(e) admixing water.

Optionally, the method comprises:
(a) providing ash;
(b) calcining the ash;
(c) providing slag;
(d) admixing the ash and slag to provide a mixture of ash and slag; and
(e) admixing water.

Optionally, the method comprises:
(a) providing ash;
(b) reducing the particle size of the ash;
(c) calcining the ash;
(d) providing slag;
(e) admixing the ash and slag to provide a mixture of ash and slag;
(f) admixing at least one activator; and
(g) admixing water.

Optionally, the method further comprises admixing water in a ratio to the mixture of ash and slag of at least 1:1 (w/w, water:ash+slag).

Further optionally, the method further comprises admixing water in a ratio to the mixture of ash and slag of at least 1:2 (w/w, water:ash+slag).

Preferably, the method further comprises admixing water in a ratio to the mixture of ash and slag of 1:2 (w/w, water:ash+slag).

Optionally, the method further comprises admixing at least one aggregate. Further optionally, the method further comprises admixing at least one aggregate with the ash and slag. Still further optionally, the method further comprises admixing at least one aggregate with the mixture of ash and slag.

Optionally, the method comprises:
(a) providing ash;
(b) providing slag;
(c) admixing the ash and slag to provide a mixture of ash and slag;
(d) admixing at least one aggregate; and
(e) admixing water.

Optionally, the method comprises:
(a) providing ash;
(b) providing slag;
(c) admixing the ash and slag to provide a mixture of ash and slag;
(d) admixing at least one aggregate;
(e) admixing at least one activator; and
(f) admixing water.

Optionally, the method comprises:
(a) providing ash;
(b) calcining the ash;
(c) providing slag;
(d) admixing the ash and slag to provide a mixture of ash and slag;
(e) admixing at least one aggregate; and
(f) admixing water.

Optionally, the method comprises:
(a) providing ash;
(b) reducing the particle size of the ash;
(c) calcining the ash;
(d) providing slag;
(e) admixing the ash and slag to provide a mixture of ash and slag;
(f) admixing at least one aggregate;
(g) admixing at least one activator; and
(h) admixing water.

Optionally, the at least one aggregate is sand.

Optionally, the method further comprises admixing at least one aggregate in a ratio to the mixture of ash and slag of at least 1:3 (w/w, aggregate:ash+slag).

Further optionally, the method further comprises admixing at least one aggregate in a ratio to the mixture of ash and slag of at least 1:2 (w/w, aggregate:ash+slag), optionally at least 1:1 (w/w, aggregate:ash+slag), optionally at least 2:1 (w/w, aggregate:ash+slag), optionally at least 3:1 (w/w, aggregate:ash+slag).

Still further optionally, the method further comprises admixing at least one aggregate in a ratio to the mixture of ash and slag of at least 2:1 (w/w, aggregate:ash+slag), optionally at least 3:1 (w/w, aggregate:ash+slag).

Preferably, the method further comprises admixing at least one aggregate in a ratio to the mixture of ash and slag of 2:1 (w/w, aggregate:ash+slag).

Optionally, the method is a method of increasing the mechanical strength, optionally the flexural strength, optionally the compressive strength of an article.

According to a third aspect of the present invention there is provided an article comprising the binding composition according to the first aspect of the present invention or a binding composition obtained by the method according to the second aspect of the present invention.

According to a third aspect of the present invention there is provided use of the binding composition according to the first aspect of the present invention or a binding composition obtained by the method according to the second aspect of the present invention in increasing the mechanical strength, optionally the flexural strength, optionally the compressive strength of an article.

Optionally, the article is a mortar, concrete, brick, tile, block, or other refractory material.

Optionally, the binding composition is a binder.

Optionally, the binding composition is a cement.

Optionally, the binding composition is a concrete.

### Brief description of the drawings

Accompanying drawings are provided in which:
Figure 1 illustrates the mineral composition of ash, wherein P: Potassium Calcium Magnesium Phosphate KCa₉Mg(PO₄)₇ [PDF 04-017-5717]; C: Calcite CaCO₃ [PDF 00-047-1743]; B: Butshliite K₂Ca(CO₃)₂ [PDF 00-025-0626]; M: Merwinite Ca₃Mg(SiO₄)₂ [PDF 04-011-6738]; and E: Enstatite MgSiO₃ [PDF 04-009-8359];
Figure 2 illustrates the compressive strength of mortars comprising binding compositions at 28 days;
Figure 3 illustrates the mineral compositions of binding compositions at 28 days, wherein H: Hydrotalcite Mg6Al2(CO3)(OH)16 4H2O PDF 00-041-1428; C: Calcite CaCO3 PDF 00-066-0867; and Q: Quartz SiO2 PDF 00-001-0378;
Figure 4 is SEM micrographs of binding composition 40A60G and EDX analysis at 180 days;
Figure 5 is SEM micrographs of binding composition 40A60G4NC and EDX analysis at 180 days;
Figure 6 illustrates the mineral composition of ash;
Figure 7 illustrates the mechanical performance of mortars comprising binding compositions at 28 days;
Figure 8 illustrates the mineral composition of binding compositions at 28 days, wherein C: Calcite CaCO3 PDF 00-066-0867; Q: Quartz SiO2 PDF 00-001-0378; and G: Galussite Na2Ca(CO3)2 (H2O)5 PDF 04-010-3621;
Figure 9 illustrates the mineral composition of ash; wherein A_{S}: Sodium aluminium silicate, Na_{1.15}Al_{1.15}Si_{0.85}O_{4;} A_{S2}: Sodium aluminium silicate, Na_{0.98}Al_{0.98}Si_{1.02}Q_{4;} A: Albite, NaAlSi₃O₈, and Q: Quartz, SiO_{2;}
Figure 10 illustrates the mechanical performance of mortars comprising binding compositions at 28 days;
Figure 11 illustrates the mineral composition of binding compositions at 28 days, wherein Q: Quartz SiO2 PDF 00-001-0378; and G: Galussite Na2Ca(CO3)2 (H2O)5 PDF 04-010-3621; and
Figure 12 is micrographs of binding compositions with different amounts of ash at 180 days.

### Examples

### Example 1

Biomass ash (BA) was collected from an olive oil manufacturer in Spain. The olive cake was used as feedstock to provide heat during oil production. The combustion of the olive cake was uncontrolled. The raw BA was dry and dark yellow, including fine powder and some large molten masses. To obtain a uniform powder, it was ground in a ball mill (Orto Alresa ISO9001) for 2 hours.

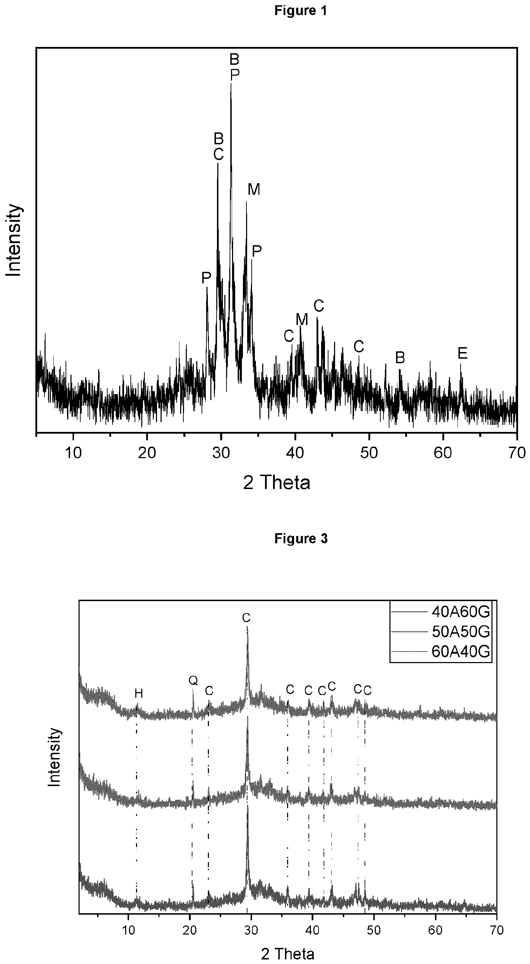

X-ray diffraction (XRD) analyses of the BA by means of a Bruker D5000 apparatus revealed that the BA is partially amorphous. It comprises mainly carbonates (calcite (CaCO₃ [PDF 00-047-1743]), butshliite (K₂Ca(CO₃)₂ [PDF 00-025-0626])) and potassium, calcium, magnesium, and phosphate. Merwinite (Ca₃Mg(SiO₄)₂ [PDF 04-011-6738]), and enstatite (MgSiO₃ [PDF 04-009-8359]), were also detected probably originating from the melted slag (see Figure 1). The chemical composition of BA shows that the BA comprises mainly CaO and K₂O, with some SiO₂ and Fe₂O₃.

Ground granulated blast-furnace slag (GGBS) was collected from Ecocem Ltd., Ireland.

The chemical composition of BA and GGBS is given in Table 1.

**Table 1: Chemical composition of the BA and GGBS analysed by X-Ray Fluorescence and expressed as % wt by oxide**

| | **SiO₂** | **Al₂O₃** | **Fe₂O₃** | **CaO** | **MgO** | **MnO** | **TiO₂** | **SO₃** | **Cl** |
|---|---|---|---|---|---|---|---|---|---|
| **BA** | 5.26 | 0.73 | 2.48 | 19.95 | 3.87 | - | - | - | - |
| **GGBS** | 36.5 | 10.4 | 0.7 | 42.4 | 8.1 | 0.4 | 0.5 | 0.1 | 0.01 |

The ground BA was mixed with GGBS with weight ratios of 60%:40%, 50%:50% and 40%:60% in a ball mill for 1 hour to ensure adequate mixing.

Sodium carbonate (Na₂CO₃) was used as an activator in the BA-GGBS system. The dosage of sodium carbonate was 4% and 10% to the weight of BA and GGBS.

The mix design is given in Table 2.

**Table 2: Mix design of BA-GGBS mortar**

| **Notation** | **Binder** | | **Auxiliary Activator** | **Water** | **Sand** | **w/b** |
|---|---|---|---|---|---|---|
| | **BA** | **GGBS** | **Na₂CO₃** | | | |
| **60A40G** | 300 | 200 | - | 250 | 1000 | 0.5 |
| **50A50G** | 250 | 250 | - | 250 | 1000 | 0.5 |
| **40A60G** | 200 | 300 | - | 250 | 1000 | 0.5 |
| **40A60G4NC** | 200 | 300 | 20 | 250 | 1000 | 0.5 |
| **40A60G10NC** | 200 | 300 | 50 | 250 | 1000 | 0.5 |

The mineral composition of the BA-GGBS binding composition was analysed with X-Ray Diffraction (XRD) using the powder method, by means of a Bruker D5000 apparatus from 2 to 70° 2Θ. The hydration products in BA-GGBS binding compositions at 180 days, were investigated with a SEM apparatus featuring an EDX attachment. EDX was used for the elemental analysis of the hydrates formed. The equipment consists of a Zeiss ULTRA plus apparatus with a 20mm² Oxford Inca EDX detector. Images and composition spectra were taken for powder and paste specimens coated with gold/palladium to avoid charging.

The BA-GGBS binding compositions produced were used to fabricate mortar specimens to test the mechanical properties. The mixing proportions of BA+GGBS and sand are constant at 1:2. The mix proportions are presented in Table 2. All solid components (BA, GGBS, sodium carbonate and sand) were mixed for 2 minutes in a mechanical mixer. The water required, as determined with the initial flow test, was then added and mixed for a further 5 minutes. The fresh slurry was cast into 160×40×40 mm steel moulds and cured, and wrapped in polyethene film to prevent moisture loss. The specimens were demoulded after 24 hours and stored in a curing room at 20 ± 3 deg.C under damp hessian to maintain humidity. The flexural and compressive strength were measured at 28 days using prismatic specimens of 160×40×40 mm, with a Zwick loading machine according to EN 196-3:2016.

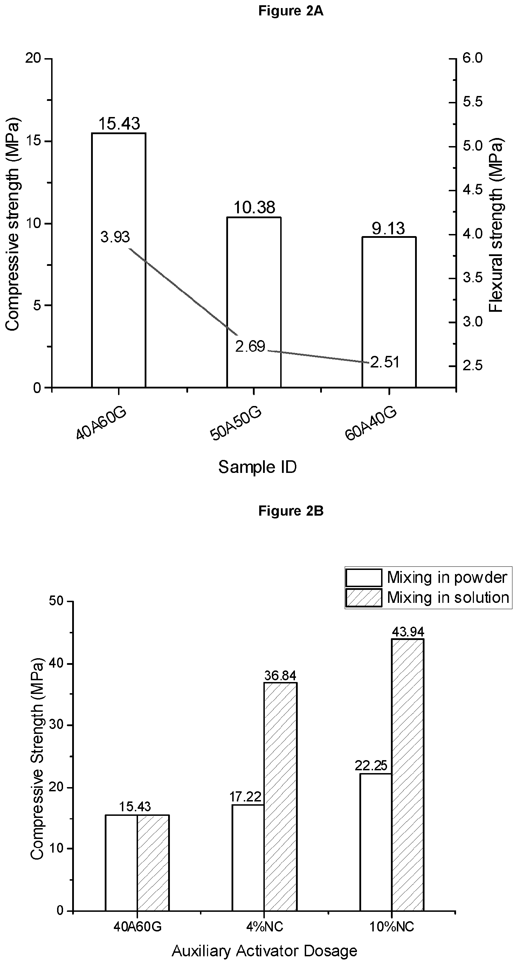

The compressive strength and flexural strength of BA-GGBS binding compositions at 28 days is illustrated in Figure 2. Increasing the substitution rate of GGBS to BA has a positive impact on the mechanical properties of the mortar. When the replacement rate of GGBS to BA was increased from 40% to 60%, the compressive strength of the mortar was increased from 9.13 MPa to 15.43 MPa, and the flexural strength was increased from 2.51 MPa to 3.93 MPa.

The mechanical properties were significantly improved with the addition of sodium carbonate as an auxiliary activator. When sodium carbonate was added in powder form, the compressive strength of BA-GGBS-NC mortar increased from 15.43 MPa to 17.22 MPa (4% sodium carbonate) and 21.77 MPa (10% sodium carbonate), respectively. When sodium carbonate was added in pre-dissolved solution form, the compressive strength of BA-GGBS-NC mortar increased from 15.43 MPa to 36.84 MPa (4% sodium carbonate) and 43.94 MPa (10% sodium carbonate), respectively.

The mineral composition of BA-GGBS (-NC) binding compositions is illustrated in Figure 3. With different substitution ratios of BA, the mineral composition of BA-GGBS binding compositions showed no significant difference. A hump centred at 31.1° 2θ was detected in all the binding compositions suggesting the presence of amorphous C-S-H gel, which is the main reaction product of alkali-activated slag. Calcite (CaCO₃) and a small amount of quartz (SiO₂) and hydrotalcite were the main crystalline phases in the pastes. The Ca-O bond in GGBS is weaker than its Si-O and Al-O bonds. Ca²⁺ released from GGBS tended to form calcite prior to the formation of hydrotalcite and C-S-H gels.

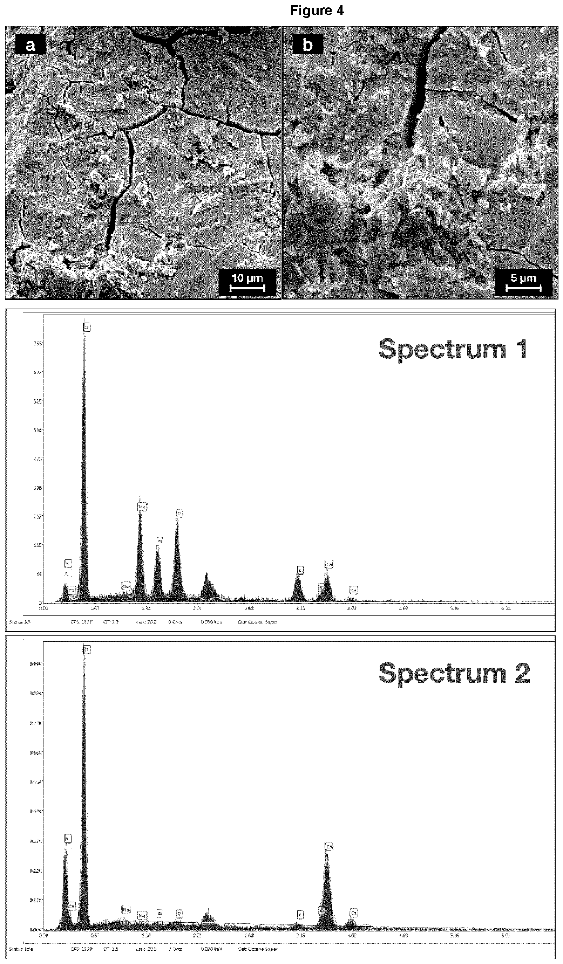

The microstructure of the binding composition 40A60G is illustrated in Figure 4. The micrograph illustrates a compact, amorphous solid matrix accompanied by scattered salt crystals, consistent with XRD analyses in Figure 3. No significant unreacted particles or pores were found in the field of view. EDX analysis conducted on the amorphous matrix, which was formed by the BA-activated GGBS, showcased notable concentrations of K, Ca, Si, and Al. This observation is indicative of the presence of C-A-S-H and K-A-S-H gel, affirming the initiation of the polymerization reaction. The micrograph also reveals varying degrees of cracks distributed across the amorphous matrix. These cracks could potentially stem from water loss and homogeneous shrinkage subsequent to the polymerization reaction.

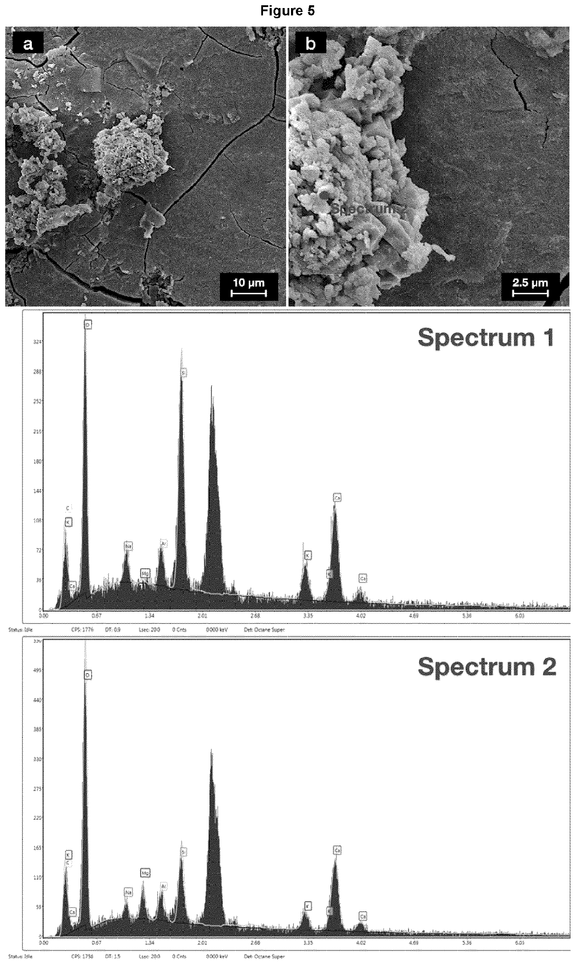

The micrographs of BA-GGBS binding compositions with 4% sodium carbonate auxiliary activators are illustrated in Figure 5. In the binding composition that is auxiliary activated by sodium carbonate, a much denser matrix was found. Unlike the other groups, the NC-doped binding composition exhibited a smooth and flat cross-section and finer cracks. The involvement of Na promoted the formation of extra N-A-S-H gels potentially contributing to the mechanical performance development. The Ca and Si concentrations in binding composition 40A60G4NC were found to be 15.54% and 13.50%, respectively; while in binding composition 40A60G were 7.34% and 8.09%. The increase of Ca and Si contents proved that GGBS was further activated by NC and the increase of Si would benefit to form a denser matrix.

### Example 2

Biomass ash was collected from Beijing Zhineng Xiangying Energy Conservation and Environmental Protection Technology Co. The biomass ash is derived from the combustion of rice husk and corn straw. The collected BA contained large sintered solids. To obtain a homogeneous powder, the BA was ground in a ball mill (Orto Alresa ISO9001) for 2 hours.

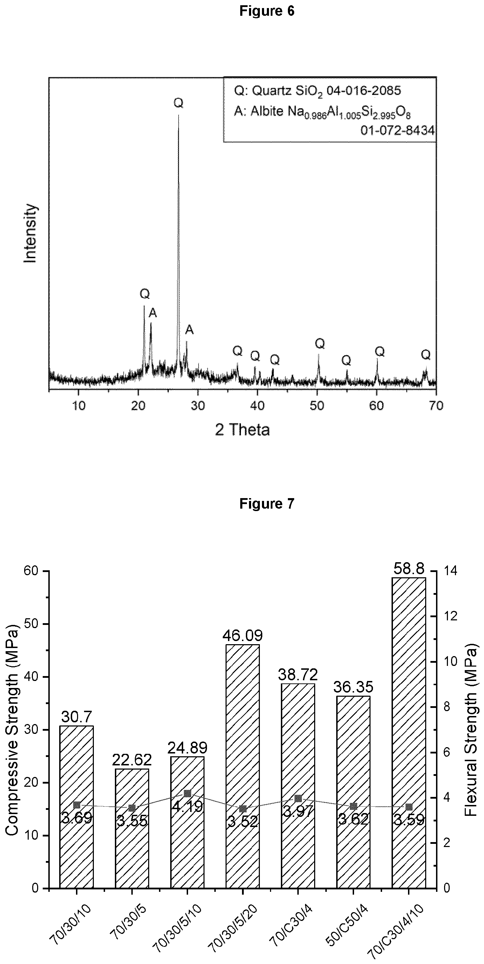

X-ray diffraction (XRD) analyses of the BA by means of a Bruker D5000 apparatus revealed that the quartz and albite were the main crystalline phases detected in the CBA powder (see Figure 6). Quartz and albite are widely found in various biomass ash and were considered from the fuel contaminants and sand. A hump centred at 25° 2θ indicated the presence of amorphous contents. The chemical composition of BA shows that the BA comprises mainly SiO₂ and Al₂O₃, with some CaO and K₂O (see Table 3).

Ground granulated blast-furnace slag (GGBS) was collected from Ecocem Ltd., Ireland.

The chemical composition of BA and GGBS is given in Table 3.

To increase the reactivity, the BA was fused with sodium hydroxide with a ratio of 1 :0.25 (BA:sodium hydroxide, by weight).

Sodium silicate and sodium carbonate were used as auxiliary activator in this example.

The ground BA, GGBS, sodium carbonate and sodium silicate were mixed in a ball mill for 1 hour to ensure adequate mixing.

The mix design is given in Table 4.

**Table 3: Chemical composition of the BA and GGBS analysed by X-Ray Fluorescence and expressed as % wt by oxide**

| | **SiO₂** | **Al₂O₃** | **Fe₂O₃** | **CaO** | **MgO** | **MnO** | **TiO₂** | **SO₃** | **Cl** |
|---|---|---|---|---|---|---|---|---|---|
| **BA** | 68.40 | 12.85 | 5.01 | 1.75 | 1.24 | - | - | - | - |
| **GGBS** | 36.5 | 10.4 | 0.7 | 42.4 | 8.1 | 0.4 | 0.5 | 0.1 | 0.01 |

**Table 4: Mix design of BA-GGBS mortar**

| **Notation** | **Precursor** | | **Activator** | | **Sand** | **Water** | **w/b** |
|---|---|---|---|---|---|---|---|
| | GGBS | CBA | NC | NS | | | |
| **70/30/10** | 280 | 120 | 40 | 0 | 1200 | 200 | 0.50 |
| **70/30/5** | 280 | 120 | 20 | 0 | 1200 | 200 | 0.50 |
| **70/30/5/10** | 280 | 120 | 20 | 40 | 1200 | 200 | 0.50 |
| **70/30/5/20** | 280 | 120 | 20 | 80 | 1200 | 200 | 0.50 |
| **70/C30/4** | 280 | 120 | 16 | 0 | 1200 | 200 | 0.50 |
| **50/C50/4** | 200 | 200 | 16 | 0 | 1200 | 200 | 0.50 |
| **70/C30/4/10** | 280 | 120 | 16 | 40 | 1200 | 200 | 0.50 |

The mineral composition of the BA-GGBS binding composition was analysed with X-Ray Diffraction (XRD) using the powder method, by means of a Bruker D5000 apparatus from 2 to 70° 2θ. The hydration products in BA-GGBS binding compositions at 180 days were investigated with a SEM apparatus featuring an EDX attachment. EDX was used for the elemental analysis of the hydrates formed. The equipment consists of a Zeiss ULTRA plus apparatus with a 20mm² Oxford Inca EDX detector. Images and composition spectra were taken for powder and paste specimens coated with gold/palladium to avoid charging.

The BA-GGBS binding compositions produced were used to fabricate mortar specimens to test the mechanical properties. The mixing proportions of BA+GGBS and sand are constant at 1:3. The mix proportions are presented in Table 4. All solid components (BA, GGBS, sodium carbonate, sodium silicate and sand) were mixed for 2 minutes in a mechanical mixer. The water required, as determined with the initial flow test, was then added and mixed for a further 5 minutes. The fresh slurry was cast into 160×40×40 mm steel moulds and cured. The specimens were demoulded after 24 hours and stored in a curing room at 20 ± 3 deg.C, under damp hessian to maintain humidity. The flexural and compressive strength were measured at 28 days using prismatic specimens of 160×40×40 mm, with a Zwick loading machine according to EN 196-3:2016.

The compressive strength and flexural strength of BA-GGBS binding compositions at 28 days is illustrated in Figure 7. The untreated BA could substitute 30% GGBS and be activated by at least 5% sodium carbonate, and raising the dosage of sodium carbonate increased the compressive strength of mortars comprising the binding composition form 22.62 MPa (5% sodium carbonate) to 30.70 MPa (10% sodium carbonate). Adding extra sodium silicate further increased the mechanical performance of mortars comprising the binding composition. As illustrated in Figure 7, when the dosage of silicate was 10% and 20%, the compressive strength increased to 24.89 MPa and 46.09 MPa, respectively.

When the BA was calcined with sodium hydroxide, the treated BA could substitute up to 50% GGBS and be activated by at least 4% sodium carbonate. In comparison to the mortar made with untreated BA, the mechanical performance of mortars made with calcined BA was increased. The mortar made with 30% treated BA and 70% GGBS yielded the compressive strength of 38.72 MPa while the substitution of GGBS increased to 50%, the compressive strength was decreased slightly to 36.35 MPa. Adding extra sodium silicate would significantly increase the treated BA-GGBS mortar to 58.80 MPa.

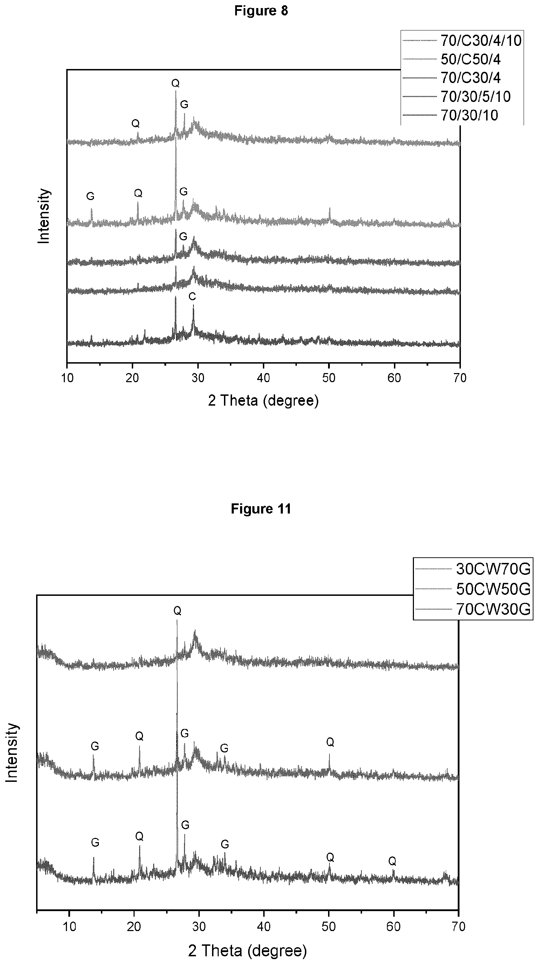

The mineral composition of BA-GGBS binding compositions at 28 days is illustrated in Figure 8. Gaylussite and calcite were the main crystalline phases detected as the reaction product between Ca²⁺ in GGBS and carbonate. Quartz was also found as a mineral component inherited from BA. A hump centred at -29.4 °2θ was detected indicating the presence the amorphous C-S-H gel.

### Example 3

Biomass ash was obtained from Beijing Zhineng Xiangying Energy Conservation and Environmental Protection Technology Co. The biomass ash is derived from the combustion of rice husk and corn straw. The collected BA contained large sintered solids. To obtain a homogeneous powder, the BA was ground in a ball mill (Orto Alresa ISO9001) for 2 hours.

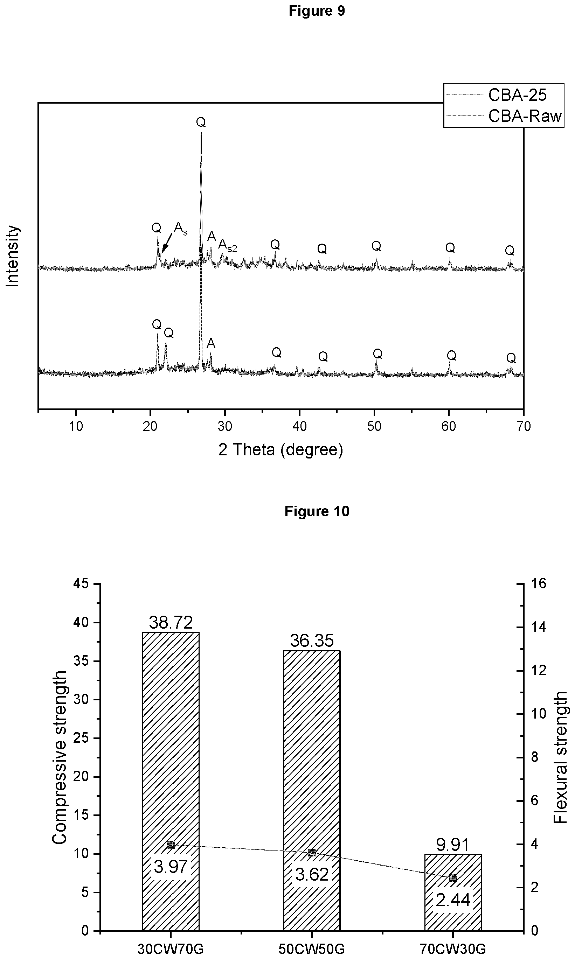

X-ray diffraction (XRD) analyses using a Bruker D5000 apparatus identified quartz and albite as the primary crystalline phases present in the CBA powder (see Figure 9). Quartz and albite are widely found in various biomass ash and were considered from the fuel contaminants and sand. A hump centred at 25° 2θ indicated the presence of amorphous contents. To improve the reactivity, BA was further calcined with 25% NaOH at 600 deg.C for 2 hours. The XRD pattern is illustrated in Figure 9.

The chemical composition of BA shows that the BA comprises mainly SiO₂ and Al₂O₃, with some CaO and K₂O (see Table 5).

Ground granulated blast-furnace slag (GGBS) was obtained from Ecocem Ltd., Ireland.

The chemical composition of BA and GGBS is given in Table 5.

Sodium carbonate was used as an activator in this example.

The mix design is given in Table 6.

**Table 5: Chemical composition of the BA and GGBS analysed by X-Ray Fluorescence and expressed as % wt by oxide**

| | **SiO₂** | **Al₂O₃** | **Fe₂O₃** | **CaO** | **MgO** | **MnO** | **TiO₂** | **SO₃** | **Cl** |
|---|---|---|---|---|---|---|---|---|---|
| **BA** | 68.40 | 12.85 | 5.01 | 1.75 | 1.24 | - | - | - | - |
| **GGBS** | 36.5 | 10.4 | 0.7 | 42.4 | 8.1 | 0.4 | 0.5 | 0.1 | 0.01 |

**Table 6: Mix design of BA-GGBS mortar**

| **Notation** | **Precursor** | | **Activator** | **Sand** | **Water** | **w/b** |
|---|---|---|---|---|---|---|
| | **GGBS** | **CBA** | **NC** | | | |
| **70CW30G** | 280 | 120 | 16 | 1200 | 200 | 0.50 |
| **50CW50G** | 200 | 200 | 16 | 1200 | 200 | 0.50 |
| **30CW70G** | 120 | 280 | 16 | 1200 | 200 | 0.50 |

The mineral composition of the BA-GGBS binding compositions was analysed with X-Ray Diffraction (XRD) using the powder method, by means of a Bruker D5000 apparatus from 2 to 70° 2θ. The hydration products in BA-GGBS binding compositions at 180 days were investigated with a SEM apparatus featuring an EDX attachment. EDX was used for the elemental analysis of the hydrates formed. The equipment consists of a Zeiss ULTRA plus apparatus with a 20mm² Oxford Inca EDX detector. Images and composition spectra were taken for powder and paste specimens coated with gold/palladium to avoid charging.

The BA-GGBS binding compositions produced were used to fabricate mortar specimens to test mechanical properties. The mixing proportions of BA+GGBS and sand are constant at 1:3. The mix proportions are presented in Table 6. All solid components (BA, GGBS, sodium carbonate, sodium silicate and sand) were mixed for 2 minutes in a mechanical mixer. The water required, as determined with the initial flow test, was then added and mixed for a further 5 minutes. The fresh slurry was cast into 160×40×40 mm steel moulds and cured. The specimens were demoulded after 24 hours and stored in a curing room at 20 ± 3 deg.C under damp hessian to maintain humidity. The flexural and compressive strength were measured at 28 days using prismatic specimens of 160×40×40 mm, with a Zwick loading machine according to EN 196-3:2016.

The compressive strength and flexural strength of BA-GGBS binding compositions at 28 days are illustrated in Figure 10. Generally, substituting BA with GGBS has a negative effect on the mechanical performance of mortars comprising the binding compositions. At 28 days, the binding composition 30CW70G (30% calcined BA + 70% GGBS) exhibited compressive and flexural strengths of 38.72 MPa and 3.97 MPa, respectively. As the BA replacement increased to 50%, the compressive and flexural strength slightly decreased to 36.35 MPa and 3.62 MPa. Further increasing the BA replacement to 70% led to a significant decrease in the mechanical performance of the mortar, resulting in compressive and flexural strengths of 9.91 MPa and 2.44 MPa, respectively. By increasing the substitution ratio between BA and GGBS, the compressive strength of BA-GGBS mortar can cover the range from ~38 MPa to ~10 MPa to meet the needs of different engineering constructions.

The mineral composition of BA-GGBS binding compositions at 28 days is illustrated in Figure 11. Gaylussite and quartz were the main crystalline phases detected. Gaylussite resulted from the reaction between Ca²⁺ in GGBS and carbonate, while quartz originated as a mineral component inherited from BA. A hump centred at ~29.4 °2θ was detected indicating the presence of the amorphous gel content. As the substitution of GGBS for BA increased, the characterized peaks of quartz and gaylussite became more predominant.

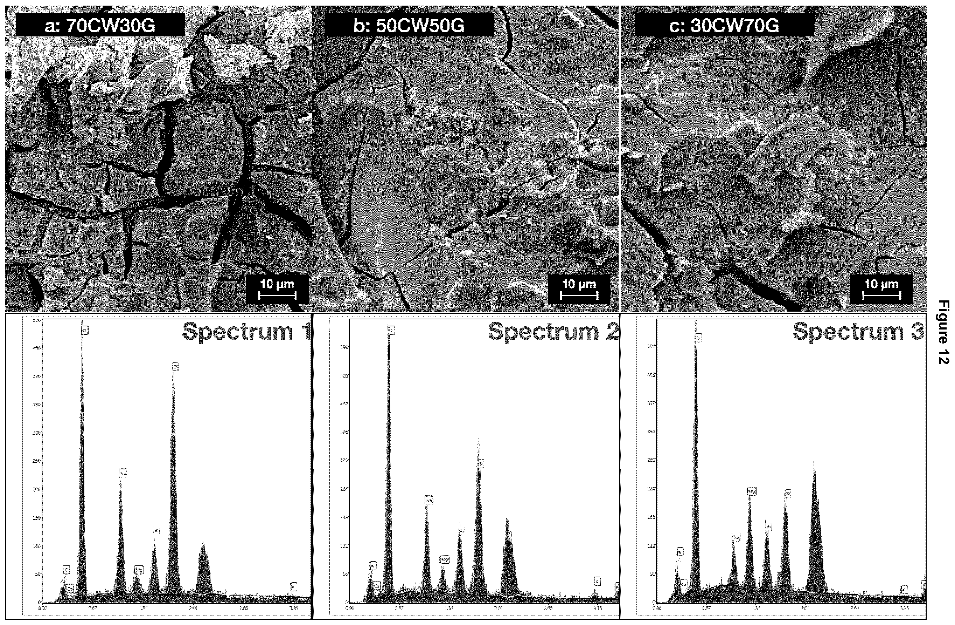

The morphology of BA-GGBS binding compositions with different BA replacements at 180 days is illustrated in Figure 12. The BA-GGBS pastes exhibited solid, dense cementing contents with varying degrees of cracking. EDX analysis revealed that the cementing content was composed of C-(N)-A-S-H gel. As the GGBS ratio increased, the microstructure of the cementing contents became denser, and the observed cracking was mitigated, which explained the change in their mechanical properties.

The invention demonstrates the potential of using locally available BA as an alkali source to produce sustainable binding compositions. This serves a dual purpose: to reduce Portland cement dependence and to recycle waste. In addition, the BA-GGBS binding compositions would have embodied lower carbon than existing conventional cements.

## Claims

1. A binding composition comprising ash and slag in a ratio of at least 10:90 (w/w, ash:slag).

2. A binding composition according to claim 1, wherein the binding composition comprises ash and slag in a ratio of at least 30:70 (w/w, ash:slag).

3. A binding composition according to claim 1 or 2, wherein the binding composition comprises ash and slag in a ratio of at least 40:60 (w/w, ash:slag).

4. A binding composition according to any preceding claim, wherein the ash is biomass ash.

5. A binding composition according to any preceding claim, wherein the ash comprises calcium oxide (CaO), silicon dioxide (SiO2), iron(III) oxide (Fe2O3), aluminium(III) oxide (Al2O3), and magnesium oxide (MgO).

6. A binding composition according to any preceding claim, wherein the ash comprises at least 19.95 % (w/w) calcium oxide (CaO); at least 5.26 % (w/w) silicon dioxide (SiO2); at least 2.48 % (w/w) iron(III) oxide (Fe2O3); at least 0.73 % (w/w) aluminium(III) oxide (Al2O3); and at least 3.87 % (w/w) magnesium oxide (MgO).

7. A binding composition according to any preceding claim, wherein the binding composition further comprises sodium hydroxide.

8. A binding composition according to any preceding claim, wherein the slag is selected from blast furnace slag, air-cooled blast furnace slag, basic oxygen furnace slag, and electric arc furnace slag.

9. A binding composition according to any preceding claim, wherein the slag comprises calcium oxide (CaO), silicon dioxide (SiO2), iron(III) oxide (Fe2O3), aluminium(III) oxide (Al2O3), magnesium oxide (MgO), manganese(II) oxide (MnO), titanium(IV) oxide (TiO2), sulfur trioxide (SO3), and chlorine (Cl).

10. A binding composition according to any preceding claim, wherein the slag comprises at least 42.4 % (w/w) calcium oxide (CaO); at least 36.5 % (w/w) silicon dioxide (SiO2); at least 0.7 % (w/w) iron(III) oxide (Fe2O3); at least 10.4 % (w/w) aluminium(III) oxide (Al2O3); at least 8.1 % (w/w) magnesium oxide (MgO); at least 0.4 % (w/w) manganese(II) oxide (MnO); at least at least 0.5 % (w/w) titanium(IV) oxide (TiO2); at least 0.1 % (w/w) sulfur trioxide (SO3); and at least 0.01 % (w/w) chlorine (Cl).

11. A binding composition according to any preceding claim, wherein the binding composition further comprises at least one activator that is sodium carbonate (Na2CO3) or hydrates thereof and/or a sodium silicate.

12. A method for preparing a binding composition according to any preceding claim, the method comprising:
(a) providing the ash;
(b) providing the slag; and
(c) admixing the ash and slag to provide a mixture of ash and slag.

13. A method according to claim 12, wherein the providing the ash step comprises calcining the ash.

14. A method according to claim 13, wherein the calcining the ash step comprises contacting the ash with sodium hydroxide.

15. A method according to any of claims 12-14, wherein the method further comprises admixing at least one activator that is sodium carbonate (Na2CO3) or hydrates thereof and/or a sodium silicate.
